# EUROPEAN PATENT APPLICATION

(11) **EP 2 101 398 A2**
(43) Date of publication of application: **16.09.2009**
(21) Application number: 09154818.0
(22) Date of filing: 11.03.2009
(51) Int. Cl.: H02K 55/06, H02K 1/24, H02K 7/18

(54) **Superconducting homopolar alternator for wind power applications**

(30) Priority: 13.03.2008 US 47661
(71) Applicant: General Electric Company, Schenectady, NY 12345 (US)
(72) Inventor: Bray, James William, Niskayuna, NY 12309 (US); Laskaris, Evangelos Trifon, Schenectady, NY 12309 (US); Sivasubramaniam, Kiruba Haran, Clifton Park, NY 12065 (US)
(74) Representative: Bedford, Grant Richard

(57) **Abstract**

A system 100 for generating power includes a homopolar electrical generator having, a superconducting field coil 211 operative to create a magnetic field, and a homopolar rotor assembly 201 operative to rotate in the magnetic field such that a rotating magnetic field couples with a stationary winding by an interaction of a rotating permeance wave produced by the homopolar rotor assembly and the magnetic field created by the superconducting field coil, and a wind turbine mechanically linked to the homopolar electrical generator operative to rotate the homopolar rotor assembly 201.

## Description

An embodiment of the invention relates generally to superconducting homopolar alternators, and more particularly to systems involving using superconducting homopolar alternators for wind power applications.

In this regard, superconducting homopolar alternators that include a superconducting field coil that is not installed on a rotor assembly are advantagious in multiple applications. Since superconducting field coils use cryogenic fluid to cool the coils, a non-rotating superconducting field coil simplifies the components used to deliver cryogenic fluid to the coils. Additionally, the electrical connections to the rotor assembly are simplified; since there are no coils on the rotor, electrical connections via brushes or other means are not present. Systems that utilize superconducting homopolar alternators that include a superconducting field coil that is not installed on a rotor assembly for power generation are desired.

An exemplary embodiment of the present invention includes a system for generating power comprising, a homopolar electrical generator having, a superconducting field coil operative to create a magnetic field, and a homopolar rotor assembly operative to rotate in the magnetic field such that a rotating magnetic field couples with a stationary winding by an interaction of a rotating permeance wave produced by the homopolar rotor assembly and the magnetic field created by the superconducting field coil, and a wind turbine mechanically linked to the homopolar electrical generator operative to rotate the homopolar rotor assembly.

An alternate exemplary embodiment includes homopolar electrical generator system comprising, a superconducting field coil operative to create a magnetic field, and a homopolar rotor assembly including, a hub portion having an inner cavity partially defined by the hub portion, and a polar portion engaging an outer circumference of the hub portion having a plurality of poles, wherein the homopolar rotor assembly is operative to rotate in the magnetic field such that a rotating magnetic field couples with a stationary winding by an interaction of a rotating permeance wave produced by the homopolar rotor assembly and the magnetic field created by the superconducting field coil.

Another alternate exemplary embodiment includes a homopolar electrical generator system comprising, a superconducting field coil operative to create a magnetic field, a homopolar rotor assembly including, a hub portion having an inner cavity partially defined by the hub portion, and a polar portion engaging an outer circumference of the hub portion having a plurality of poles, wherein the homopolar rotor assembly is operative to rotate in the magnetic field such that a rotating magnetic field couples with a stationary winding by an interaction of a rotating permeance wave produced by the homopolar rotor assembly and the magnetic field created by the superconducting field coil, and a wind turbine mechanically linked to the homopolar electrical generator system operative to rotate the homopolar rotor assembly.

Various features, aspects, and advantages of the present invention will become better understood when the following detailed description is read with reference to the accompanying drawings in which like characters represent like parts throughout the drawings, wherein:
FIG. 1 is an illustration of an exemplary embodiment of a system using a superconducting homopolar alternator.
FIG. 2 is an illustration of a perspective partially cut-away view of an exemplary embodiment of a superconducting homopolar alternator system.
FIG. 3 is an illustration of a perspective view of an alternate exemplary embodiment of a rotor assembly of the superconducting homopolar alternator system of FIG. 2.
FIG. 4 is an illustration of a front view of an alternate exemplary embodiment of a rotor assembly of the superconducting homopolar alternator system of FIG. 2.

In the following detailed description, numerous specific details are set forth in order to provide a thorough understanding of various embodiments. However, the embodiments may be practiced without these specific details. In other instances, well known methods, procedures, and components have not been described in detail.

Further, various operations may be described as multiple discrete steps performed in a manner that is helpful for understanding embodiments of the invention. However, the order of description should not be construed as to imply that these operations need be performed in the order they are presented, or that they are even order dependent. Moreover, repeated usage of the phrase "in an embodiment" does not necessarily refer to the same embodiment, although it may. Lastly, the terms "comprising," "including," "having," and the like, as used in the present application, are intended to be synonymous unless otherwise indicated.

Superconducting homopolar alternators are used to generate electrical power. A wind turbine system having a superconducting homopolar alternator that has a superconducting field coil that is not installed on a rotor offers efficient and clean electrical power generation with a relatively small installed weight.

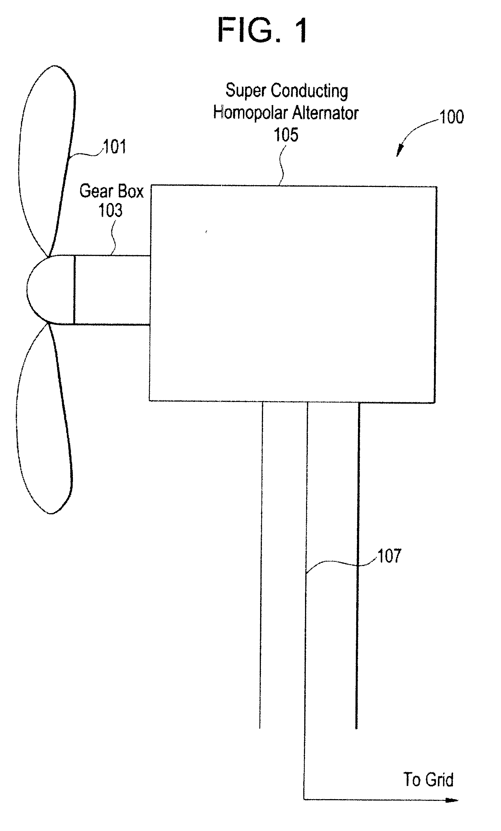

Referring to FIG. 1, a wind turbine drive train system for generating electrical power 100 is shown. The system 100 includes wind blades 101, a gear box 103, and a superconducting homopolar alternator 105 mechanically linked to the wind blades 101 via the gear box 103 and shafts (not shown). A cable 107 is in electrical communication with the superconducting homopolar alternator 105 and a power grid (not shown) and often a power electronics conversion system (not shown).

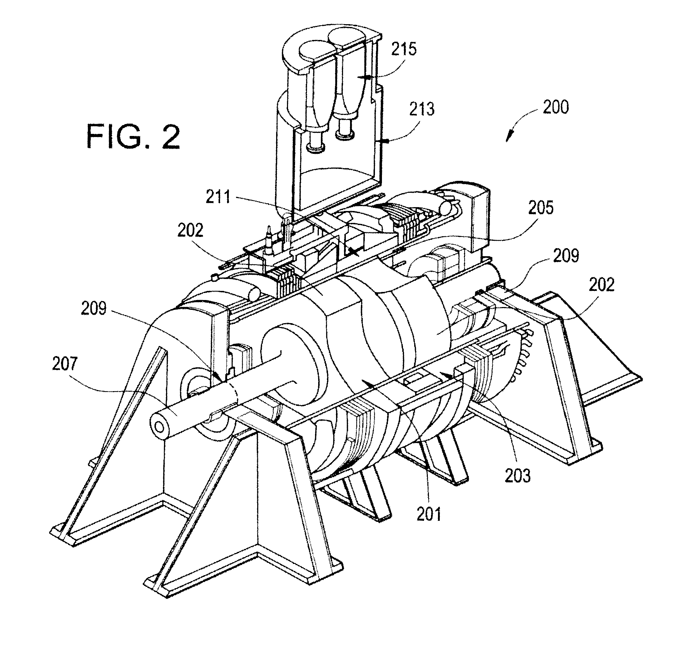

FIG. 2 illustrates a perspective partially cut-away view of an exemplary embodiment of a superconducting homopolar alternator system 200 that may, for example, be used in the system 100. The superconducting homopolar alternator system 200 includes a homopolar rotor assembly 201 that includes poles 202, linked to a shaft assembly 207. The poles 202 comprise a ferro-magnetic material. The shaft assembly 207 engages bearings 209. The illustrated embodiment further includes a stator yoke 203, an armature 205, and a superconducting field coil 211. A cryocooler 215 and a re-condenser 213 are also included in the system 200. For optimal power density, it is advantageous that the rotor assembly 201 and the yoke 203 compose of soft magnetic material with as high magnetic saturation and magnetic susceptibility as possible, and as low magnetic hysteresis as possible. The superconducting field coil 211 may be composed of any superconducting wire, such as NbTi, Nb₃Sn, BSCCO, YBCO, or MgB₂ The temperature supplied by the cryocooler 215 is determined by the operating characteristics of the superconducting wire employed.

In operation, the superconducting homopolar alternator system 200 produces electrical power. The cryocooler 215 is operative to maintain a temperature in the superconducting field coil 211 that allows the superconducting field coil 211 to induce a magnetic field that surrounds the homopolar rotor assembly 201. The cryocooler 215 may be any type of cryocooler that will maintain the proper temperature of the superconducting field coil 211. The cryocooler 215 may operate with cryogenic liquids such as, for example, nitrogen and neon. The shaft assembly 207 is mechanically linked to the wind turbine 101 via the gear box 103 (of FIG. 1). As wind turns the wind turbine 101, the shaft assembly 207 rotates, and in turn, rotates the rotor assembly 201.

The rotating poles 202 in the homopolar rotor assembly 201 induce a permeance wave of magnetic flux. The flux produced by the rotating poles 202 causes a rotating magnetic field that passes through stationary windings in the stator yoke 203 (an armature winding). The rotating magnetic field generates a current flow in the stationary windings in the stator yoke 203. In the illustrated embodiment the homopolar rotor assembly 201 rotates at approximately 200 revolutions per minute (rpm). The operational speed of the homopolar rotor assembly 201 will vary based on the speed of the rotation of the wind turbine 101 (caused by varying wind velocities) and the gear ratio of the gear box 103.

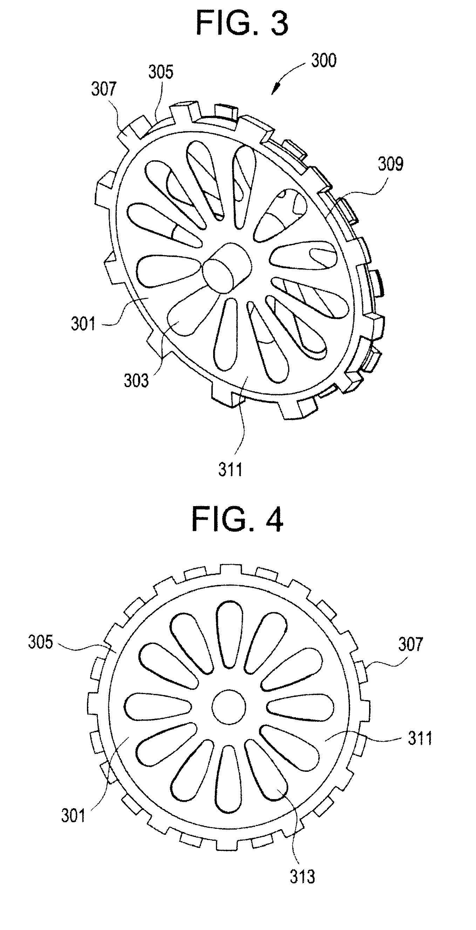

FIG. 3 illustrates a perspective view of an alternate exempliary embodiment of the homopolar rotor assembly 201. Fig. 3 includes a radial flux homopolar inductor alternator, however axial flux machines may also be used. A lightweight homopolar rotor assembly 300 is shown. The lightweight homopolar rotor assembly 300 includes a hub portion 301 having an outer surface 311 and optional inner cavities 303 partially defined by the hub portion 301. A polar portion 305 engages an outer circumference 309 of the hub portion 301. The polar portion 305 includes a plurality of poles 307. FIG. 4 illustrates a front view of the lightweight homopolar rotor assembly 300. FIG. 4 shows the outer surface 311 having openings 303. The inner cavity and the openings 303 may be used to reduce the weight of the rotor.

The use of the lightweight homopolar rotor assembly 300 allows the superconducting homopolar alternator system 200 to operate more efficiently in wind turbine applications. For optimal power density, it is advantageous that the rotor assembly 300 and its portions 301, 305, 307 to compose of soft magnetic material with as high magnetic saturation and magnetic susceptibility as possible, and as low magnetic hysteresis as possible.

This written description uses examples to disclose the invention, including the preferred mode, and also to enable practice of the invention, including making and using any devices or systems and performing any incorporated methods. The patentable scope in an embodiment of the invention is defined by the claims, and may include other examples. Such other examples are intended to be within the scope of the claims if they have structural elements that do not differ from the literal language of the claims, or if they include equivalent structural elements with insubstantial differences from the literal languages of the claims.

Various aspects and embodiments of the present invention are now defined by the following numbered clauses:
1. A system for generating power comprising:

a homopolar electrical generator having:
   a superconducting field coil operative to create a magnetic field; and
   a homopolar rotor assembly operative to rotate in the magnetic field such that a rotating magnetic field couples with a stationary winding by an interaction of a rotating permeance wave produced by the homopolar rotor assembly and the magnetic field created by the superconducting field coil; and
   a wind turbine mechanically linked to the homopolar electrical generator operative to rotate the homopolar rotor assembly.
2. The system of clause 1, wherein the system further comprises a nitrogen cryocooler.
3. The system of any preceding clause, wherein the system further comprises a neon cryocooler.
4. The system of any preceding clause, wherein the homopolar rotor assembly is operative to rotate at approximately 200 revolutions per minute.
5. A homopolar electrical generator system comprising:
   a superconducting field coil operative to create a magnetic field; and
   a homopolar rotor assembly including:
      a hub portion having an inner cavity partially defined by the hub portion; and
      a polar portion engaging an outer circumference of the hub portion having a plurality of poles, wherein the homopolar rotor assembly is operative to rotate in the magnetic field such that a rotating magnetic field couples with a stationary winding by an interaction of a rotating permeance wave produced by the homopolar rotor assembly and the magnetic field created by the superconducting field coil.
6. The system of clause 5, wherein the hub portion further comprises:
   an outer surface; and
   an opening communicative with the outer surface and the inner cavity.
7. The system of clause 5 or 6, wherein the system further comprises a nitrogen cryocooler.
8. The system of any of clauses 5 to 7, wherein the system further comprises a neon cryocooler.
9. The system of any of clauses 5 to 8, wherein the homopolar rotor assembly is operative to rotate at approximately 200 revolutions per minute.
10. A homopolar electrical generator system comprising:
   a superconducting field coil operative to create a magnetic field;
   a homopolar rotor assembly including:
      a hub portion having an inner cavity partially defined by the hub portion; and
      a polar portion engaging an outer circumference of the hub portion having a plurality of poles, wherein the homopolar rotor assembly is operative to rotate in the magnetic field such that a rotating magnetic field couples with a stationary winding by an interaction of a rotating permeance wave produced by the homopolar rotor assembly and the magnetic field created by the single stationary superconducting field coil; and
      a wind turbine mechanically linked to the homopolar electrical generator system operative to rotate the homopolar rotor assembly.
11. The system of clause 10, wherein the hub portion further comprises:
   an outer surface; and
   an opening communicative with the outer surface and the inner cavity.
12. The system of clause 10 or 11, wherein the system further comprises a nitrogen cryocooler.
13. The system of any of clauses 10 to 12, wherein the system further comprises a neon cryocooler.
14. The system of any of clauses 10 to 13, wherein the homopolar rotor assembly is operative to rotate at approximately 200 revolutions per minute.

## Claims

1. A system for generating power (100) comprising:
a homopolar electrical generator (105) having:
a superconducting field coil (211) operative to create a magnetic field; and
a homopolar rotor assembly (201) operative to rotate in the magnetic field such that a rotating magnetic field couples with a stationary winding (203) by an interaction of a rotating permeance wave produced by the homopolar rotor assembly (201) and the magnetic field created by the superconducting field coil (211) ; and
a wind turbine (101) mechanically linked to the homopolar electrical generator (105) operative to rotate the homopolar rotor assembly (201).

2. The system (100) of claim 1, wherein the system (100) further comprises a nitrogen cryocooler (215).

3. The system (100) of any preceding claim, wherein the system (100) further comprises a neon cryocooler (215).

4. The system (100) of any preceding claim, wherein the homopolar rotor assembly (201) is operative to rotate at approximately 200 revolutions per minute.

5. A homopolar electrical generator system (100) comprising:
a superconducting field coil (211) operative to create a magnetic field; and
a homopolar rotor assembly (201) including:
a hub portion (301) having an inner cavity partially defined by the hub portion (301); and
a polar portion (305) engaging an outer circumference (309) of the hub portion (301) having a plurality of poles(307), wherein the homopolar rotor assembly (201) is operative to rotate in the magnetic field such that a rotating magnetic field couples with a stationary winding (203) by an interaction of a rotating permeance wave produced by the homopolar rotor assembly (201) and the magnetic field created by the superconducting field coil (211).

6. The system (100) of claim 5, wherein the hub portion (301) further comprises:
an outer surface (311); and
an opening (303) communicative with the outer surface and the inner cavity.

7. The system (100) of claim 5 or 6, wherein the system further comprises a nitrogen cryocooler (215).

8. The system (100) of any of claims 5 to 7, wherein the system further comprises a neon cryocooler (215).

9. The system (100) of any of claims 5 to 8, wherein the homopolar rotor assembly (201) is operative to rotate at approximately 200 revolutions per minute
